(19) Europäisches Patentamt
European Patent Office
Office européen des brevets

(11) EP 4 373 079 A1

(12) EUROPEAN PATENT APPLICATION

(43) Date of publication:
**22.05.2024 Bulletin 2024/21**

(21) Application number: **22208534.2**

(22) Date of filing: **21.11.2022**

(51) International Patent Classification (IPC):
***H04N 13/183*** *(2018.01)* ***G06T 11/60*** *(2006.01)*
***H04N 13/271*** *(2018.01)* ***H04N 13/00*** *(2018.01)*

(52) Cooperative Patent Classification (CPC):
**H04N 13/183; G06T 11/60; H04N 13/271;**
H04N 2013/0092

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Leica Instruments (Singapore) Pte Ltd**
**Singapore 608924 (SG)**

(72) Inventors:
- **HENDARGO, Hansford**
  **North Carolina, 27703 (US)**
- **YANG, Gao**
  **650206 Singapore (SG)**

(74) Representative: **2SPL Patentanwälte PartG mbB**
**Landaubogen 3**
**81373 München (DE)**

# (54) SYSTEM, METHOD, AND COMPUTER PROGRAM FOR AN OPTICAL IMAGING SYSTEM AND CORRESPONDING OPTICAL IMAGING SYSTEM

(57) Examples relate to a system, to a method and to a computer program for an optical imaging system, such as a microscope, and to an optical imaging system comprising such a system. The system is configured to obtain stereoscopic image data of a scene from a stereoscopic imaging device of the optical imaging system. The system is configured to determine depth information on at least a portion of the scene. The system is configured to determine a scaling factor of an information overlay to be overlaid over the stereoscopic image data based on the depth information. The system is configured to generate a stereoscopic composite view of the stereoscopic image data and the information overlay, with the information overlay being scaled according to the scaling factor. The system is configured to provide a display signal comprising the stereoscopic composite view to a stereoscopic display device.

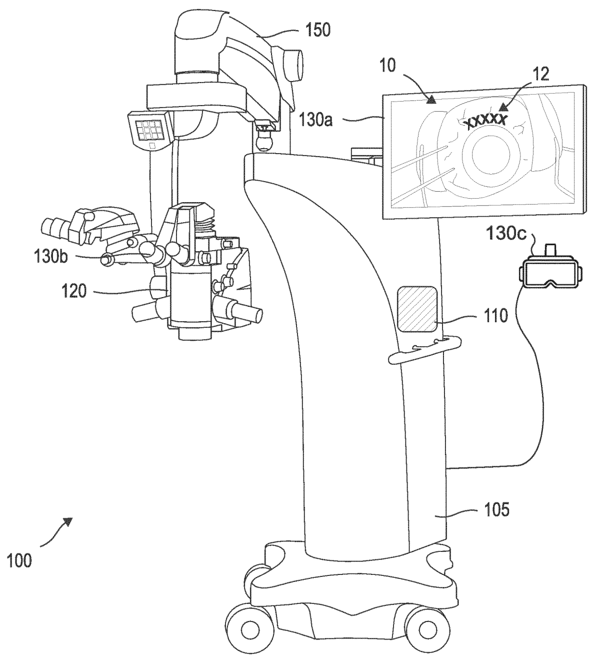


Fig. 1b

EP 4 373 079 A1

## Description

### Technical field

Examples relate to a system, to a method and to a computer program for an optical imaging system, such as a microscope system, and to an optical imaging system comprising such a system.

### Background

Stereo microscopes are a popular type of microscope. In recent years, advances have been made to provide 3D stereo imaging microscope systems, which use multiple imaging sensors, a single plenoptic image sensor, or a single translatable sensor, to acquire images from multiple perspectives of a scene. The system then displays at least two 2D images that appear as a single 3D image to an end user due to stereopsis, e.g., using a variety of possible display means (i.e., polarization, color encoded, active shutter, etc.). Additional graphic markers can be added post-acquisition to the 3D scene to augment visualization of key features in the image.

For example, US patent application US 2015 0249817 A1 relates to a concept for placing hardcoded overlays in a 3D image using information from a depth map. However, said patent application fails to provide an automatic method for creating additional graphic overlays on a stereoscopic image that enables said graphics to be positioned with both the proper depth location in the image as well as the correct perceived scale by a viewer.

There may be a desire for an improved concept for displaying a variable graphic information overlay inside a stereoscopic view.

### Summary

This desire is addressed by the subject-matter of the independent claims.

Various examples of the present disclosure are based on the finding, that, to augment the information in an image, it is often desired to insert arbitrary graphical overlays to highlight regions of interest to the user or to provide additional insight and context regarding the state of an imaging system or on specific features contained within the image. For a 3D stereoscopic image, simply creating an overlay graphic on the composite without considering its perceived depth can result in an incorrect or distorted perception of the depth of the graphic relative to the rest of the image features in the 3D scene. The proposed concept provides a technique for drawing graphical information overlays onto the individual images of the respective stereo set at the proper position such that, upon rendering of the composite stereo image, the graphic is perceived by the viewer to be placed at the correct depth in the screen, and with a suitable x-y-scaling factor, so that the graphic appears to have the correct scaling at the desired perceived depth.

Some aspects of the present disclosure relate to a system for an optical imaging system. The system comprises one or more processors and one or more storage devices. The system is configured to obtain stereoscopic image data of a scene from a stereoscopic imaging device of the optical imaging system. The system is configured to determine depth information on at least a portion of the scene. The system is configured to determine a scaling factor of an information overlay to be overlaid over the stereoscopic image data based on the depth information. The system is configured to generate a stereoscopic composite view of the stereoscopic image data and the information overlay, with the information overlay being scaled according to the scaling factor. The system is configured to provide a display signal comprising the stereoscopic composite view to a stereoscopic display device. Using the determined depth information and scaling factor, the information overlay can be inserted into the composite view such, that the graphic appears to have the correct scaling at the desired perceived depth.

The present concept is aimed at improving the perception of an information overlay in a stereoscopic composite view, with the stereoscopic image data being used to generate the composite view showing the sample from different perspectives. Using the stereoscopic image data, the depth of the portion of the scene can be estimated, e.g., by calculating a disparity map from the stereoscopic image data and deriving the depth information from the disparity map. Accordingly, the system may be configured to determine the depth information based on the stereoscopic image data. For example, the system may be configured to determine a disparity map based on the stereoscopic image data, and to determine the depth information based on the disparity map. Alternatively, the depth information may be determined using structured light, which is temporarily shown in the stereoscopic image data. Using the stereoscopic image data to determine the depth information renders the use of a separate, dedicated depth sensor unnecessary.

When the depth information is derived from the stereoscopic image data, the depth information can be easily mapped onto the stereoscopic image data, and thus the stereoscopic composite view. For example, the system may be configured to determine per-pixel depth information of the portion of the scene based on the stereoscopic image data, and to determine the depth information in the real world by back-projecting the per-pixel depth information, with the scaling factor being determined based on the depth information in the real world. In other words, the back-projection may be used to transform the depth information, which has been calculated with respect to the stereoscopic image data, into the real world. Similarly, forward-projection can be used to then place the information overlay within the stereoscopic composite view (on top of the stereoscopic image data).

Another option is the use of a separate depth sensor, which may be used instead of, or in addition to, depth information that is derived from the stereoscopic image data. For example, the system may be configured to obtain a depth sensor signal of a depth sensor of the optical imaging system, and to determine the depth information based on the depth sensor signal. For example, a Time-of-Flight-based depth sensor, a dedicated laser-based depth sensor (e.g., a structured light-based depth sensor) or an optical coherence tomography (OCT) depth sensor may be used.

As outlined above, the depth information being calculated may correspond to depth information in the real world. To insert the information overlay into the stereoscopic composite view, on top of the stereoscopic image data, forward-projection may be used. For example, the system may be configured to generate the stereoscopic composite view by forward-projecting the information overlay based on the depth information in the real world onto each individual stereo image of the stereoscopic composite view, so that the information overlay visually appears to be drawn at real-world depth.

The purpose of the proposed technique lies in inserting the information overlay into the composite view such, that the graphic appears to have the correct scaling at the desired perceived depth. To make sure that the information overlay looks "right", care may be taken that the information overlay does not collide with the sample (e.g., with topography surrounding the main sample being imaged). The system may be configured to overlay the information overlay over the stereoscopic image data such, that, according to the depth information, the overlay does not visually collide with elements of the portion of the scene. Moreover, the system may be configured to determine a depth profile of the portion of the scene, and to overlay the information overlay over the stereoscopic image data such, that, according to the depth profile, the overlay does not visually collide with elements of the portion of the scene. For example, the proposed concept may in particular be used in surgical contexts (e.g., as part of a surgical imaging system), where the sample being imaged is a part of a surgical site. However, surgical sites often have a diverse topography, with narrow wound tracts being preferred to support the healing process. The proposed concept may be used to avoid the information overlay visually colliding with anatomical features, making the information overlay look "right" when it is inserted in the stereoscopic composite view. For example, the system may be configured to adapt a perceived shape of the information overlay such, that the information is adapted to the depth profile of the portion of the scene. Thus, the shape of the information overlay may be adapted to the depth profile (to follow the depth profile, or to limit the information overlay to avoid a collision with a portion of the sample).

In some examples, the system may be configured to overlay the information overlay over the stereoscopic image data such, that, according to the depth information, the overlay visually hovers above the portion of the scene. When the information overlay appears to hover over the portion of the scene, it looks "right" to the user of the microscope, which may improve perception of the information contained in the information overlay.

In the proposed concept, the depth information is determined for a portion of the scene. This portion of the scene may be selected, e.g., by the user of the optical imaging system, or automatically by the system. For example, the system may be configured to (automatically) select the portion of the scene, and to determine the depth information for the selected portion of the scene. In other words, the system may automatically determine the portion of the scene that is used as frame of reference for the information overlay.

In some examples, the system may be configured to select the portion of the scene by selecting a portion of a field of view of the stereoscopic image data that is at the center of the field of view of the stereoscopic image data. In many cases, the user of the optical imaging system, e.g., a surgeon, positions the optical imaging system such, that the feature of interest to the user is at the center of the field of view.

Alternatively, or additionally, the system may be configured to select the portion of the scene by performing object detection or image segmentation on the stereoscopic image data and selecting the portion of the scene based on a detected object or based on a segmented portion of the stereoscopic image data. In other words, an object of interest may be detected within the stereoscopic image data, and the portion of the scene may be selected based on the detected object of interest. Thus, a portion of the scene may be selected that appears to be relevant for the user of the optical imaging system.

In the present disclosure, the term "optical imaging system" is used to address various types of optical imaging systems, such as microscope systems, endoscope systems, and other types of optical imaging systems as well. One major application relates to the use of the system in the context of a microscope system, and in particular of a surgical microscope system. Accordingly, the system may be configured to obtain the stereoscopic image data from one or more optical imaging sensors of a microscope, e.g., of a microscope of a surgical microscope system. The proposed concept may thus be used to insert an information overlay into a composite view being shown to a user of a microscope, e.g., to a surgeon during a surgical procedure. This may aid the user/surgeon during their respective task, by reducing distractions due to unsuitably presented information overlays.

In general, the resulting display signal may be provided to different types of display devices. For example, the system may be configured to provide the stereoscopic display signal to a display for displaying three-dimensional content. Alternatively, or additionally, the system may be configured to provide the stereoscopic display signal to stereoscopic ocular displays. Alternatively, or additionally, the system may be configured to provide the stereoscopic display signal to a stereoscopic head-mounted display. Each type of stereoscopic display device has advantages, such as a large display area that can be viewed by multiple users for the display for displaying three-dimensional content, an intuitive viewing experience for the stereoscopic ocular displays, and additional degrees of freedom of movement for the stereoscopic head-mounted display.

Another aspect of the present disclosure relates to a surgical imaging system comprising the system presented above the stereoscopic imaging device. For example, the surgical imaging system may be a surgical microscope system, with the stereoscopic imaging device being a stereo microscope.

Some aspects of the present disclosure relate to a method for an optical imaging system. The method comprises obtaining stereoscopic image data of a scene of a stereoscopic imaging device of the optical imaging system. The method comprises determining depth information on at least a portion of the scene. The method comprises determining a scaling factor of an information overlay to be overlaid over the stereoscopic image data based on the depth information. The method comprises generating a stereoscopic composite view of the stereoscopic image data and the information overlay, with the information overlay being scaled according to the scaling factor. The method comprises providing a display signal comprising the stereoscopic composite view to a stereoscopic display device.

Another aspect of the present disclosure relates to a computer program with a program code for performing the above method when the computer program is run on a processor.

## Short description of the Figures

Some examples of apparatuses and/or methods will be described in the following by way of example only, and with reference to the accompanying figures, in which

Fig. 1a shows a block diagram of an example of a system for an optical imaging system;

Fig. 1b shows a schematic diagram of a surgical microscope system comprising a system for an optical imaging system;

Fig. 2 shows a flow chart of an example of a method for an optical imaging system;

Fig. 3 shows an example of a stereo imaging system with multiple cameras;

Fig. 4 shows an example of a stereo imaging system with a single, dynamically positioned camera;

Fig. 5 shows an illustration of a back-projection calculation;

Fig. 6 shows a flow chart of an example of a processing method; and

Fig. 7 shows a schematic diagram of an example of a system comprising a microscope and a computer system.

## Detailed Description

Various examples will now be described more fully with reference to the accompanying drawings in which some examples are illustrated. In the figures, the thicknesses of lines, layers and/or regions may be exaggerated for clarity.

Fig. 1a shows a block diagram of an example of a system 110 for an optical imaging system 100. The system 110 is a component of the optical imaging system 100 and may be used to control various aspects of the optical imaging system 100. In particular, the system 110 is used to process stereoscopic image data of a stereoscopic imaging device 120 of the optical imaging system, and to generate a display signal based on the stereoscopic image data. Therefore, the system 110 may be considered an image processing system of the optical imaging system. In addition, the system 110 may be configured to control additional aspects of the optical imaging system. For example, the optical imaging system may be a surgical imaging system, and in particular a surgical microscope system. The system may be used to control various aspects of the surgical imaging system, such an illumination provided by the surgical imaging system, a placement of the stereoscopic imaging device relative to a surgical site being imaged, or one or more auxiliary surgical devices being controlled via the surgical imaging device.

In general, the system 110 may be implemented as a computer system. The system 110 comprises one or more processors 114 and one or more storage devices 116. Optionally, the system 110 further comprises one or more interfaces 112. The one or more processors 114 are coupled to the one or more storage devices 116 and to the one or more interfaces 112. In general, the functionality of the system 110 may be provided by the one or more processors 114, in conjunction with the one or more interfaces 112 (for exchanging data/information with one or more other components of the optical imaging system 100 and outside the optical imaging system 100, such as one or more optical imaging sensors of the stereoscopic imaging device 120, a display device 130, a depth sensor 140 and/or a robotic adjustment system 150), and with the one or more storage devices 116 (for storing information, such as machine-readable instructions of a computer program being executed by the one or more processors). In general, the functionality of the one or more processors 114 may be implemented by the one or more processors 114 executing machine-readable instructions. Accordingly, any feature ascribed to the one or more processors 114 may be defined by one or more instructions of a plurality of machine-readable instructions. The system 110 may comprise the machine-readable instructions, e.g., within the one or more storage devices 116.

As outlined above, the system 110 is part of the optical imaging system 100, which comprises various components in addition to the system 110. For example, the optical imaging system 100 comprises the stereoscopic imaging device 120, and may comprise one or more additional components, such as the aforementioned display device 130, depth sensor 140 or robotic adjustment system 150. Fig. 1b shows a schematic diagram of an example of such an optical imaging system 100, and in particular of a surgical imaging system / surgical microscope system 100. In the following, the optical imaging system 100 may also be referred to as surgical imaging system 100 or surgical microscope system 100, which is an optical imaging system 100 that comprises a (surgical) stereoscopic imaging device, such as a digital stereo microscope, as stereoscopic imaging device 120. However, the proposed concept is not limited to such embodiments. The optical imaging system 100 may be based on various stereoscopic imaging devices, such as one or more microscopes, one or more endoscopes, one or more radiation imaging devices, or one or more surgical tomography devices (such as optical coherence tomography devices) etc. Accordingly, the optical imaging system may alternatively be a surgical endoscope system, a surgical radiation imaging system or a surgical tomography system. However, the following illustrations assume that the stereoscopic imaging device 120 is a (surgical) microscope, and that the optical imaging system 100 is a surgical microscope system 100.

Accordingly, the optical imaging system 100 or surgical microscope system 100 may comprise a digital stereo microscope 120. In general, a microscope, such as the microscope 120, is an optical instrument that is suitable for examining objects that are too small to be examined by the human eye (alone). For example, a microscope may provide an optical magnification of a sample. The microscope may be a hybrid (optical and digital) microscope, or a digital microscope (where the oculars or a display show a digital view of the surgical site). In modern hybrid or digital microscopes, the optical magnification is (also) provided for an optical imaging sensor. Therefore, the stereoscopic imaging device / stereo microscope 120 thus comprises one or more optical imaging sensors, which is/are coupled with the system 110. The stereoscopic imaging device/microscope 120 may further comprise one or more optical magnification components that are used to magnify a view on the sample, such as an objective (i.e., lens). For example, the stereoscopic imaging device or microscope 120 is often also called the "optics carrier" of the optical imaging system.

There are a variety of different types of stereoscopic imaging devices. If the stereoscopic imaging device is used in the medical or biological fields, the object or scene being viewed through the stereoscopic imaging device may be a sample of organic tissue, e.g., arranged within a petri dish or present in a part of a body of a patient. In various examples presented here, the stereoscopic imaging device 120 may be a digital or hybrid stereo microscope of a surgical microscope system, i.e., a microscope that is to be used during a surgical procedure, such as an oncological surgical procedure or during tumor surgery. Accordingly, the object or scene being viewed through the stereoscopic imaging device, may be a sample of organic tissue of a patient, and may be in particular be the surgical site that the surgeon operates on during the surgical procedure. For example, the object or scene to be imaged, i.e., the surgical site, may be a surgical site of a brain during the course of neurosurgery. However, the proposed concept is also suitable for other types of surgery, such as cardiac surgery or ophthalmology.

In general, an optical imaging system, such as the surgical imaging system 100, is a system that comprises an optical imaging device (i.e., the stereoscopic imaging device 120) and additional components, which are operated together with the microscope, such as the system 110 (which may be a computer system being adapted to control the surgical microscope system, and, for example, process imaging sensor data of the microscope), and additional sensors, displays etc.

Fig. 1b shows a schematic diagram of an example of an optical imaging system 100, and in particular of a surgical microscope system 100, comprising the system 110 and a stereoscopic imaging device / stereo microscope 120. The surgical microscope system 100 shown in Fig. 1b comprises a number of optional components, such as a base unit 105 (comprising the system 110) with a (rolling) stand, a 3D display 130a, digital stereoscopic ocular displays 130b that are arranged at the stereoscopic imaging device / stereo microscope 120, a (wired or wireless) stereoscopic head-mounted display 130c (which may alternatively be considered to be separate, but connected to the optical imaging system), a depth sensor 140 (not shown in Fig. 1b) and the robotic adjustment system 150, which is shown as a (robotic or manual) arm 150 which holds the stereoscopic imaging device / stereo microscope 120 in place, and which is coupled to the base unit 105 and to the microscope 120. In general, these optional and non-optional components may be coupled to the system 110, which may be configured to control and/or interact with the respective components.

In the proposed concept, the system 110 is, in particular, used to generate a composite view of stereoscopic image data and an information overlay. It uses depth information on a portion of the scene being imaged by the stereoscopic imaging device to determine a scaling factor, and then uses the scaling factor to generate the composite view. In particular, the system 110 is configured to obtain stereoscopic image data of a scene 10 (shown in Fig. 1b) from the stereoscopic imaging device 120 of the optical imaging system. The system 110 is configured to determine depth information on at least a portion of the scene. The system 110 is configured to determine a scaling factor of the information overlay 12 to be overlaid over the stereoscopic image data based on the depth information. The system 110 is configured to generate a stereoscopic composite view of the stereoscopic image data and the information overlay, with the information overlay being scaled according to the scaling factor. The system 110 is configured to provide a display signal comprising the stereoscopic composite view to a stereoscopic display device 130a, 130b, 130c.

The proposed concept is based on two types of data - the stereoscopic image data, and the depth information (which may, in various examples, be derived from the stereoscopic image data). The stereoscopic image data, is, as the name suggests, stereoscopic. In other words, the stereoscopic image data shows the scene, which may be a surgical site, from at (at least) two perspectives. Such stereoscopic image data may be provided by a (digital or hybrid) stereoscopic microscope, i.e., a microscope having two (stereoscopic) light paths. Accordingly, the system may be configured to obtain the stereoscopic image data from one or more optical imaging sensors of a (stereo) microscope 120. For example, as will be illustrated in more detail in connection with Figs. 3 and 4, the stereoscopic imaging device 120 may either comprise multiple (e.g., two) fixed optical imaging sensors, which may be used to generate the stereo images of the stereoscopic image data from two perspectives, or a single sensor, which may be used swiveled between two positions to alternatingly generate the stereo images of the stereoscopic image data. Alternatively, a mirror may be swiveled, or a shutter may be used to alternately guide light from the two different perspectives to the single optical image sensor of the stereoscopic imaging device.

The second information being used in the proposed concept is the aforementioned depth information on at least a portion of the scene. For example, the depth information may indicate the position of the portion of the scene relative to the stereoscopic imaging device, e.g., the distance from the stereoscopic imaging device. For example, the depth information may be pixel-based depth information, and may indicate, on a pixel-per-pixel basis, the position of the portion of the scene relative to the stereoscopic imaging device, e.g., the distance from the stereoscopic imaging device. For example, the depth information may be defined relative to a coordinate system, e.g., relative to a world coordinate system, and/or relative to a coordinate system that is defined relative to the stereoscopic imaging device.

In various examples, the depth information may be derived from the stereoscopic imaging data. In other words, the system may be configured to determine the depth information based on the stereoscopic image data. In the following, two approaches are illustrated: a disparity map-based approach, and a structured light-based approach.

For example, the system may be configured to determine a disparity map (i.e., a pair of disparity maps) based on the stereoscopic image data, and to determine the depth information based on the disparity map. In general, such a disparity map represents the differences between the two channels of the stereoscopic image data. In stereoscopic imaging, objects that are located closer to the stereoscopic imaging device result in a larger disparity between the two stereo channels of the stereoscopic image data, while objects that are located further away from the stereoscopic imaging device result in a smaller disparity. To calculate the disparity map (i.e., disparity maps), the difference in location of the objects visible in the scene are calculated (by the system) and included on a pixel-per-pixel basis in the disparity map. From the disparity values, the distance (i.e., depth) of the respective pixels from the stereoscopic imaging device can be calculated, resulting in per-pixel-depth information (representing the distance between the portion of the scene represented by the respective pixels and the stereoscopic imaging device).

As an alternative, a structured light-based approach can be used. In structured light-based depth sensing, a known pattern (usually a dot pattern or line/grid pattern) is projected onto the scene. In other words, if a structured light-based approach is used, the optical imaging system may further comprise an emitter (e.g., light source) for emitting structured light. The pattern is then reflected by the scene and recorded by the optical imaging system, e.g., by the stereoscopic imaging device or by a dedicated structured light sensor. From the deformation of the pattern, as sensed by the stereoscopic imaging device or structured light sensor, the distance of the portions of the scene represented by the individual pixels of the stereoscopic image data (or structured light sensor data) can be calculated by the system. Similar to the disparity map-based technique, this results in per-pixel-depth information (representing the distance between the portion of the scene represented by the respective pixels and the stereoscopic imaging device or structured light sensor).

Alternatively, or additionally, the system may be configured to obtain a depth sensor signal of a depth sensor 140, such as Time-of-Flight (ToF)-based depth sensor (e.g., an ultrasound-based ToF sensor or an infrared-based ToF sensor), an Optical Coherence Tomography (OCT) sensor, or a laser ranging sensor, and to determine the depth information based on the depth sensor signal. The specifics of the respective depth sensor signal depend on the type of sensor being used. In some examples, the depth sensor signal may comprise per-pixel-depth information, or the system may be configured to calculate per-pixel-depth information based on the depth sensor signal.

This per-pixel depth information may now be transformed into a world coordinate system. For example, the system may be configured to determine per-pixel depth information of the portion of the scene based on the stereoscopic image data (or based on a depth sensor signal of a stereoscopic depth sensor), and to determine the depth information in the real world (i.e., relative to the world coordinate system, which may be defined relative to the stereoscopic imaging device) by back-projecting the per-pixel depth information. In other words, the system may be configured to translate the per-pixel depth information into coordinates in the real world (e.g., relative to the stereoscopic imaging device), and then proceed further with depth information that is defined in the real world (i.e., in the real-world coordinate system). An example of such a conversion is shown in connection with Figs. 5 and 6, for example. In the example of Fig. 5, u and *v* are the pixel coordinates (within the disparity map), and *s* is the per-pixel depth information. From the per-pixel depth information *s*, the real-world depth $Z_w$ is calculated, based on an intrinsic calibration matrix *K* of the camera being used (e.g., the stereoscopic imaging device) and extrinsic calibration parameters *R* (rotation) and *t* (translation), with the extrinsic calibration parameters describing the relationship between the world coordinate system and the camera coordinate system. The scaling factor may then be determined based on the depth information in the real world, e.g., based on the real-world depth information $Z_w$.

In the previous examples, the term "portion of a scene" has been used. In some examples, the portion of the scene may correspond to the field of view of the stereoscopic imaging device. In some examples, however, the portion of the scene may correspond to a portion within (or independent of) the field of view of the stereoscopic imaging device. The system may be configured to select the portion of the scene, e.g., according to a selection criterion, and to determine the depth information for the selected portion of the scene, e.g., for pixels of the stereoscopic image data that represent the selected portion of the scene.

In a simple example, the portion of the scene being considered may be a portion of the field of view of the stereoscopic image data that is at the center of the field of view, as the user of an optical imaging device, such as a stereo microscope, is usually interested in the objects at the center of the field of view. Accordingly, the system may be configured to select the portion of the scene by selecting a portion of a field of view (e.g., 20% or the field of view, 30% of the field of view, 40% of the field of view, 50% of the field of view, 60% of the field of view, 70% of the field of view, or 80% of the field of view or) of the stereoscopic image data that is at the center of the field of view of the stereoscopic image data. For example, a circular portion, a quadratic portion of a rectangular portion at the center of the field of view may be selected as portion of the field of view.

In some examples, a more complex methodology may be used. In the present concept, an information overlay is to be combined with the stereoscopic image data. Such an information overlay may comprise information on the portion of the field of view. For example, if the scene is surgical site, the information overlay may comprise information on one or more properties of anatomical or non-anatomical features (e.g., stitches, clamps etc.) that are part of the surgical site. To provide an improved benefit to the user (e.g., surgeon), the information overlay may be shown in close proximity to the respective (anatomical or non-anatomical) feature. Accordingly, the portion of the scene may be selected based on the objects (e.g., anatomical, or non-anatomical features) that are part of the scene and are thus shown in the stereoscopic image data. The system may therefore be configured to select the portion of the scene by performing object detection or image segmentation on the stereoscopic image data and selecting the portion of the scene based on a detected object or based on a segmented portion of the stereoscopic image data. For example, the system may be configured to perform object detection or image segmentation on the stereoscopic image data to determine one or more features of interest, and to determine the portion of the scene based on the one or more features of interest, e.g., so that the portion of the scene coincides with the one or more features of interest, or that the portion of the scene is located adjacent to the one or more features of interest, e.g., depending on the type of information overlay being used.

In object detection, the location of one or more pre-defined objects (i.e., objects that the respective machine-learning model is trained on) in imaging sensor data, such as the stereoscopic image data, is output by a machine-learning model, along with a classification of the object (if the machine-learning model is trained to detect multiple different types of objects). In general, the location of the one or more pre-defined objects is provided as a bounding box, i.e., a set of positions forming a rectangular shape that surrounds the respective object being detected. In image segmentation, the location of features (i.e., portions of the stereoscopic image data that have similar attributes, e.g., that belong to the same object) are output by a machine-learning model. In general, the location of the features is provided as a pixel mask, i.e., the location of pixels that belong to a feature are output on a per-feature basis.

In the present concept, these two techniques may be used to identify features of interest within the stereoscopic image data. In other words, the system may be configured to identify/select the aforementioned one or more features of interest within the stereoscopic image data, and to determine the portion of the scene based on the one or more features of interest. More specifically, the system may be configured to determine the extent of one or more features of using a machine-learning model being trained to perform image segmentation and/or object detection, and to determine the portion of the scene based on the extent of the one or more features of interest

For both object detection and image segmentation, a machine-learning model is used that is trained to perform the respective task. For example, to train the machine-learning model being trained to perform object detection, a plurality of samples of (stereoscopic) imaging sensor data may be provided as training input samples, and a corresponding listing of bounding box coordinates may be provided as desired output of the training, with a supervised learning-based training algorithm being used to perform the training using the plurality of training input samples and corresponding desired output. For example, to train the machine-learning model being trained to perform image segmentation, the plurality of samples of (stereoscopic) imaging sensor data may be provided as training input samples, and corresponding pixel masks may be provided as desired output of the training, with a supervised learning-based training algorithm being used to perform the training using the plurality of training input samples and corresponding desired output. In some examples, the same machine-learning model may be used to perform both object detection and image segmentation. In this case, the two above-mentioned types of desired output may be used in parallel during the training, with the machine-learning model being trained to output both the bounding boxes and the pixel masks.

In general, both object detection and image segmentation may be used. The pixel mask(s) output by the image segmentation machine-learning model may be used to determine the extent of the one or more features of interest, while the classification provided by the object detection may be used to determine whether a feature is of interest. Accordingly, at least one of the two techniques "object detection" and "image segmentation" may be used to analyze the stereoscopic image data and determine the features within the stereoscopic image data. For example, the system may be configured to perform image segmentation on the stereoscopic image data, and to determine the extent of the one or more features of interest based on the pixel mask or pixel masks output by the image segmentation. Alternatively, or additionally, the system may be configured to perform object detection on the stereoscopic image data to identify at least one feature, and to determine the feature or features of interest among the identified (anatomical) feature(s), e.g., using the respective classification of the feature and/or proximity to the center of the field of view.

In some examples, the features being used to determine the one or more features of interest (e.g., at least one feature of interest) may be restricted to specific groups of features. For example, the system may be configured to determine at least one feature of interest among the one or more anatomical features of a surgical site. For example, the system may be configured to perform the object detection to identify at least one of a blood vessel, branching points of a blood vessel, a tumor (if used in brain surgery, for example), or an anatomical feature of an eye, such as the boundaries of the anterior chamber or posterior chamber of the eye, or an incision point within the eye (if used in eye surgery), within the stereoscopic image data as (anatomical) feature of interest. Accordingly, the machine-learning model being trained to perform object detection may be trained to detect at least one of a blood vessel, branching points of a blood vessel, a tumor, or an anatomical feature of an eye, such as the boundaries of the anterior chamber or posterior chamber of the eye, or an incision point within the eye, in (stereoscopic) imaging sensor data. Analogously, the machine-learning model being trained to perform image segmentation may be trained to perform image segmentation for at least one of a blood vessel, branching points of a blood vessel, a tumor, or an anatomical feature of an eye, such as the boundaries of the anterior chamber or posterior chamber of the eye, or an incision point within the eye, in (stereoscopic) imaging sensor data. Accordingly, the one or more anatomical features (or feature(s) of interest) may be determined based on the output of one or more machine-learning models being trained to output information, such as bounding boxes or pixel masks, representing specific features, such as the aforementioned blood vessel, branching point, tumor, or anatomical feature of an eye.

The result of the object detection or image segmentation may then be used to select the portion of the scene, which is the basis of the depth information.

The present disclosure seeks to determine a scaling factor of the information overlay. This scaling factor is linked to the depth information determined above. In addition, to make sure that the information overlay does not intersect with the scene, the depth information may also be used to determine the placement depth (and lateral placement/shape) of the information overlay. Of these factors, the placement depth may be determined such that the information overlay does not intersect with the scene (e.g., by hovering the visual information above the scene). The lateral placement may be determined such that the information overlay is suitably placed relative to the feature of interest. The scaling factor may be determined such, that the information overlay is properly scaled, i.e., that the scaling of the information overlay "looks right" according to the placement depth of the information overlay. In other words, the scaling factor depends on the placement depth of the information overlay, which in turn is determined based on the depth information. In other words, the system may be configured to determine the placement depth (i.e., the depth/distance, at which the information overlay is visually placed) based on the depth information, and to determine the scaling factor of the information overlay 12 to be overlaid over the stereoscopic image data based on the placement depth (and thus based on the depth information), or directly based on the depth information. As a consequence, the system 110 is configured to generate the stereoscopic composite view of the stereoscopic image data and the information overlay, with the information overlay being scaled according to the scaling factor and being placed according to the placement depth (and lateral placement).

In the above example, the term placement depth has been used, which is the depth/distance in the real world, at which the information overlay is to be visually placed. This term is used to indicate that the composition of the stereoscopic composite view may be performed starting from the aforementioned depth information on the real world. In other words, the system may be configured to generate the information overlay, and in particular the placement depth and the scaling factor, based on the depth information in the real world, and then project the information overlay onto the stereo images of the stereoscopic composite view, e.g., using forward-projection. In other words, the system may be configured to generate the stereoscopic composite view by forward-proj ecting the information overlay based on the depth information in the real world (e.g., based on the placement depth and corresponding scaling factor) onto each individual stereo image of the stereoscopic composite view, so that the information overlay visually appears to be drawn at real-world depth.

When compositing the composite stereoscopic view, at least two aspects may be taken into account - the scaling of the information overlay, and the placement depth of the information overlay. As outlined above, the former may depend on the latter, as the scaling of the information overlay depends on the placement depth (i.e., both depend on the depth information). In the following, the placement depth (and also lateral placement are discussed). However, the placement depth has repercussions on the scaling factor as well, as the information overlay is to be scaled according to the depth at which it is placed. In addition, the size and/or shape may be adapted to the topology of the portion of the scene.

In general, the information overlay may be included in the stereoscopic composite view such, that the information overlay is shown visually in proximity with the (anatomical) feature being referenced by the information overlay. Therefore, the information may be shown to hover above the respective portion of the scene. In other words, the system may be configured to overlay the information overlay over the stereoscopic image data such, that, according to the depth information, the overlay visually hovers above the portion of the scene. This may be done by selecting the placement depth of the information overlay to be (just) above the depth of the portion of the scene. However, in general, the scene may be a non-flat scene, i.e., the scene may have a complex topology. Accordingly, instead of using the depth information of a single pixel, the depth information of multiple pixels, e.g., of the pixels representing the portion of the scene, may be used. For example, the system may be configured to determine a depth profile of the portion of the scene, based on the depth information of the pixels representing the portion of the scene. The placement depth of the information overlay, and thus the scaling factor, may then be determined based on the depth profile, e.g., by selecting a minimal depth within the depth profile, or by generating the information overlay such, that the information overlay follows the depth profile. In other words, the system may be configured to adapt a perceived shape of the information overlay such, that the information is adapted to the depth profile of the portion of the scene.

Apart from making sure the information overlay hovers above the portion of the scene, other potential collisions may be avoided as well. For example, if the placement depth of the information overlay is determined from a depth information of a single pixel or of an average value of multiple pixels, care may be taken that the information overlay does not collide with the topography of the scene. For example, the system may be configured to overlay the information overlay over the stereoscopic image data such, that, according to the depth information, the overlay does not visually collide with elements of the portion of the scene. For this purpose, the depth profile may be used, e.g., by making sure that the condition 'does not collide' is fulfilled for the entirety of the pixels of the portion of the scene. For example, the system may be configured to determine a depth profile of the portion of the scene, and to overlay the information overlay over the stereoscopic image data such, that, according to the depth profile, the overlay does not visually collide with elements of the portion of the scene. For example, the system may be configured to adjust the extent (e.g., shape) and information contained in the information overlay based on the depth profile of the portion of the scene, e.g., to avoid visual collisions.

In the present disclosure, the abstract term "information overlay" has been used, as there is a great variety of information overlays that can be integrated in a stereoscopic composite view. In general, the information overlay is a visual overlay comprising information, e.g., information on the portion of the scene, or more general information, such as information on a progress of a surgical procedure. In other words, the information overlay may comprise at least some information that is relevant for the composite view. For example, the information overlay may comprise textual information, such as a textual description or label of one or more features shown in the stereoscopic composite view, or numerical information, such as numerical measurements of said one or more features. In some examples, the information overlay may comprise one or more graphical indicators, such as a multi-part line or translucent polygon highlighting the boundaries of a feature, a circle, or arrows highlighting a feature (such as a suggested incision point, or a bleeding).

The system then uses the generated stereoscopic composite view to generate the display signal. In other words, the system 110 is configured to and provide a display signal comprising the stereoscopic composite view to a stereoscopic display device 130a, 130b, 130c. For example, the display signal may comprise separate image streams for two channels of the stereoscopic display device, e.g., if the stereoscopic display device comprises separate displays for the two stereo channels. This may, for example, be the case, when stereoscopic oculars or a stereoscopic head-mounted display is used. Accordingly, the system may be configured to provide the stereoscopic display signal to stereoscopic ocular displays 130b, or to provide the stereoscopic display signal to a stereoscopic head-mounted display 130c. Alternatively, a joint stream may be used, e.g., when the stereo effect is generated using a technique such as polarization, color encoding or active shutter. This is the case in large-screen displays, e.g., a display 130a for displaying three-dimensional content that uses one of a polarization-based stereo effect, a color encoding-based stereo effect and an active shutter-based stereo effect, which can be used by multiple users. Accordingly, the system may be configured to provide the stereoscopic display signal to such a display 130a for displaying three-dimensional content. Alternatively, a display signal with two separate image streams may be provided to such a display, depending on the design of the respective display.

For example, the display signal may be a signal for driving (e.g., controlling) the respective stereoscopic display device 130. For example, the display signal may comprise video data and/or control instructions for driving the display. For example, the display signal may be provided via one of the one or more interfaces 112 of the system. Accordingly, the system 110 may comprise a video interface 112 that is suitable for providing the display signal to the display device 130 of the optical imaging system 100.

In the proposed optical imaging system, at least one optical imaging sensor may be used to provide the aforementioned stereoscopic image data. Accordingly, the optical imaging sensor, which may be part of the stereoscopic imaging device 120 (e.g., of the microscope) may be configured to generate the stereoscopic image data. For example, the at least one optical imaging sensor of the stereoscopic imaging device 120 may comprise or be an APS (Active Pixel Sensor) - or a CCD (Charge-Coupled-Device)-based imaging sensor. For example, in APS-based imaging sensors, light is recorded at each pixel using a photodetector and an active amplifier of the pixel. APS-based imaging sensors are often based on CMOS (Complementary Metal-Oxide-Semiconductor) or S-CMOS (Scientific CMOS) technology. In CCD-based imaging sensors, incoming photons are converted into electron charges at a semiconductor-oxide interface, which are subsequently moved between capacitive bins in the imaging sensors by a circuitry of the imaging sensors to perform the imaging. The system 110 may be configured to obtain (i.e., receive or read out) the stereoscopic image data from the optical imaging sensor. The stereoscopic image data may be obtained by receiving the stereoscopic image data from the optical imaging sensor (e.g., via the interface 112), by reading the stereoscopic image data out from a memory of the optical imaging sensor (e.g., via the interface 112), or by reading the stereoscopic image data from a storage device 116 of the system 110, e.g., after the stereoscopic image data has been written to the storage device 116 by the optical imaging sensor or by another system or processor.

The one or more interfaces 112 of the system 110 may correspond to one or more inputs and/or outputs for receiving and/or transmitting information, which may be in digital (bit) values according to a specified code, within a module, between modules or between modules of different entities. For example, the one or more interfaces 112 may comprise interface circuitry configured to receive and/or transmit information. The one or more processors 114 of the system 110 may be implemented using one or more processing units, one or more processing devices, any means for processing, such as a processor, a computer or a programmable hardware component being operable with accordingly adapted software. In other words, the described function of the one or more processors 114 may as well be implemented in software, which is then executed on one or more programmable hardware components. Such hardware components may comprise a general-purpose processor, a Digital Signal Processor (DSP), a micro-controller, etc. The one or more storage devices 116 of the system 110 may comprise at least one element of the group of a computer readable storage medium, such as a magnetic or optical storage medium, e.g., a hard disk drive, a flash memory, Floppy-Disk, Random Access Memory (RAM), Programmable Read Only Memory (PROM), Erasable Programmable Read Only Memory (EPROM), an Electronically Erasable Programmable Read Only Memory (EEPROM), or a network storage.

More details and aspects of the system and optical imaging system are mentioned in connection with the proposed concept, or one or more examples described above or below (e.g., Fig. 2 to 7). The system and/or optical imaging system may comprise one or more additional optional features corresponding to one or more aspects of the proposed concept, or one or more examples described above or below.

Fig. 2 shows a flow chart of an example of a corresponding method for an optical imaging system, e.g., for the optical imaging system 100 shown in connection with Figs. 1a and/or 1b. The method comprises obtaining 210 stereoscopic image data of a scene of a stereoscopic imaging device of the optical imaging system. The method comprises determining 220 depth information on at least a portion of the scene. The method comprises determining 230 a scaling factor of an information overlay to be overlaid over the stereoscopic image data based on the depth information. The method comprises generating 240 a stereoscopic composite view of the stereoscopic image data and the information overlay, with the information overlay being scaled according to the scaling factor. The method comprises providing 250 a display signal comprising the stereoscopic composite view to a stereoscopic display device.

For example, the method may be performed by the system and/or optical imaging system introduced in connection with one of the Figs. 1a to 1b. Features introduced in connection with the system and optical imaging system of Figs. 1a to 1b may likewise be included in the corresponding method.

More details and aspects of the method are mentioned in connection with the proposed concept, or one or more examples described above or below (e.g., Fig. 1a to 1b, 3 to 7). The method may comprise one or more additional optional features corresponding to one or more aspects of the proposed concept, or one or more examples described above or below.

Various examples of the present disclosure relate to a concept (e.g., a method) for 3D graphic display in imaging systems. In particular, examples may relate to stereoscopic graphics.

Various examples of the present disclosure provide a process for determining the correct location and perspective scale for creating a 3D graphic in stereoscopic imaging. For example, a back-projection method based on a disparity map generated from a stereo image pair may be used to determine where to draw a graphic on each individual stereo image such that the graphic is constructed in the final 3D stereo image as if the graphic actually existed at a desired position in the real world. This gives a more realistic view of the graphic as perceived by an end user. The proposed concept may help in providing users of 3D stereo microscopes (i.e., surgeons) an enhanced, more accurate visualization of the sample by providing a means to highlight specific regions of interest.

Stereomicroscope imaging systems enable 3D visualization of a scene by using two or more images acquired from different perspectives. Images from multiple perspectives are combined into a composite image, where information from each individual image is encoded into different channels, such as color, alternating lines, or rapidly switching which image is displayed. Stereoscopic imaging takes advantage of the natural process of stereopsis in human vision to give a perceived depth to objects in the image. The images may be acquired simultaneously using at least 2 imaging sensors, or if a scene is sufficiently static, the images may also be acquired using a single sensor whose position is shifted to acquired multiple images from different perspectives, as shown in Figs. 3 and 4.

Fig. 3 shows an example of a stereo imaging system with multiple cameras. In Fig. 3, the imaging system 310 comprises three cameras 321,322, 323, which provide their respective imaging sensor data to an image/graphics processor 330 (e.g., the system 110 introduced in connection with Figs. 1a and 1b), which outputs a stereoscopic image via a 3D image display 340.

Fig. 4 shows an example of a stereo imaging system with a single, dynamically positioned camera. In Fig. 4, the imaging system 410 with the camera 420 is dynamically positioned relative to a sample 400. The camera 420 provides its imaging sensor data to an image/graphics processor 430 (e.g., the system 110 introduced in connection with Figs. 1a and 1b), which outputs a stereoscopic image via a 3D image display 440.

To augment the information in an image, it is often desired to create arbitrary graphical overlays in an image to highlight regions of interest to the user or to provide additional insight and context regarding the state of an imaging system or on specific features contained within the image. For a 3D stereoscopic image, simply creating an overlay graphic, such as the information overlay introduced in connection with Figs. 1a to 2, on the composite image (i.e., the stereoscopic image data) without considering its perceived depth can result in an incorrect or distorted perception of the depth of the graphic relative to the rest of the image features in the 3D scene. Ideally, the graphic should be drawn onto each individual image of the stereo set at the proper position such that upon rendering of the composite stereo image, the graphic is perceived by the viewer to be placed at the correct depth in the scene.

Additionally, in a 2D image generated from a 3D scene, the apparent x-y scale of each pixel varies with the depth due to the perspective transformation of an object at a distance to the imaging sensor. For example, an object of a specific size will occupy a larger portion of the image field of view when its depth is closer to the sensor compared to when the object is further away. Graphic overlays that are meant to correspond to specific features in the rendered 3D scene must likewise be transformed in order to appear to have the correct scaling at the desired perceived depth.

Typical methods for creating 3D stereoscopic images do not consider the process for adding in additional overlay graphics. The proposed concept may provide a method or process for creating overlay graphics in stereoscopic imaging with the correct scaling and perceived depth when viewed by an observer of the resulting 3D image. By using a disparity map generated from at least 2 images from a stereoscopic imaging setup, the depth of each pixel in the image can be determined and back-projected to determine its depth in the real world. The graphic element may then be added to the 3D scene by forward projecting the graphic onto each individual stereo image as if the graphic were drawn at the real-world depth. When the stereo images are combined to create a 3D visualization of a scene, the desired graphic may then have a perceived position and scaling in the scene at the desired distance from the camera or relative to other objects in the scene. This technique may be useful for augmented vision applications in stereo imaging setups.

For a pair of stereo images, a disparity map gives the relative lateral translation that would map each pixel in one stereo image to its corresponding point in the opposite stereo image, though it is possible that further transformation beyond just a horizontal shift may be necessary to match points in a stereo image pair. This translation offset is related to the distance of the object from the imaging sensor. Knowledge of the separation between the imaging sensors as well as their focal lengths allows for calculation of the depth distance. The distance can be calculated as

$$z = \frac{f\,B}{D} \qquad (1)$$

where *z* is the distance of the object for a given pixel in the image, *f* is the focal length of the camera, *B* is the baseline distance between cameras in the stereo imaging setup, and *D* is the computed disparity value between the stereo images.

The distance of the individual pixels may then be used to perform the back-projection calculation, which is illustrated in Fig. 5.

In camera vision applications, the mathematical model to describe the conversion of a point in a 3D real-world coordinate system to the image plane is described by:

$$s\begin{bmatrix}u\\v\\1\end{bmatrix} = K[R|t]\begin{bmatrix}X_w\\Y_w\\Z_w\\1\end{bmatrix} \qquad (2)$$

in which a point is located at the world coordinate position ($X_w$, $Y_w$, $Z_w$), the world coordinate system is related to the camera coordinate system by rotational and translation parameters *R* and *t*, also known as the extrinsic calibration parameters. *K* is the intrinsic calibration matrix of the camera, and *u* and *v* are the pixel coordinates in the image which are known up to a depth scaling factor *s*. The intrinsic calibration matrix is given by:

$$K = \begin{bmatrix}f_x & \gamma & c_x\\0 & f_y & c_y\\0 & 0 & 1\end{bmatrix} \qquad (3)$$

where $f_x$ and $f_y$ are the x and y focal lengths of the camera, $\gamma$ is a shew factor, and $c_x$ and $c_y$ are the x and y pixel centers of the camera. The intrinsic calibration matrix can be obtained by a number of well-known calibration methods, such as imaging a checkerboard pattern of white and black squares to correlate known image points (the corners of the checkerboard) between a world coordinate system and the image coordinate system. In other words, K 510 can be obtained from camera calibration. *R* and *t* 520 can be obtained from camera calibration and arbitrary placement of world coordinate system (typically objective focal plane).

Once the intrinsic camera calibration parameters are known, the *R* and *t* factors in Eq. 2 can also be determined for an arbitrary world coordinate system by performing a fitted estimate using known points in the world coordinate system to known points in a given image using a method such as RANSAC.

Various examples of the present disclosure utilize a back-projection scheme in which the disparity map is created to generate the value for s in Eq. 2. The conversion from world coordinates to camera coordinates via the extrinsic parameters matrix in Eq. 2 can be rewritten as:

$$[R|t]\begin{bmatrix}X_w\\Y_w\\Z_w\\1\end{bmatrix} = \begin{bmatrix}r_{00} & r_{01} & r_{02} & t_x\\r_{10} & r_{11} & r_{12} & t_y\\r_{20} & r_{21} & r_{22} & t_z\end{bmatrix}\begin{bmatrix}X_w\\Y_w\\Z_w\\1\end{bmatrix} = \begin{bmatrix}r_{00} & r_{01} & r_{02}\\r_{10} & r_{11} & r_{12}\\r_{20} & r_{21} & r_{22}\end{bmatrix}\begin{bmatrix}X_w\\Y_w\\Z_w\end{bmatrix} + \begin{bmatrix}t_x\\t_y\\t_z\end{bmatrix} \qquad (4)$$

The reformulation 530 shown in Fig. 5 allows invention of the rotation matrix, which will be used in eq. 5. It allows to back-project from the image coordinates for a given point and solve for its world coordinates:

$$R^{-1}\left(K^{-1}s\begin{bmatrix}u\\v\\1\end{bmatrix} - t\right) = \begin{bmatrix}X_w\\Y_w\\Z_w\end{bmatrix} \qquad (5)$$

In this equation s 540 can be computed from the disparity map in pixel units, with *u* and *v* being pixel coordinates on the disparity map.

After $Z_W$ is computed, forward projection can be performed using $X_W$ and $Y_W$ based on the field of view of the camera at the focal plane. Thus, once $Z_W$ in the real-world coordinates is determined, an arbitrary overlay (e.g., the information overlay) can be created at the calculated depth with the desired width and height determining the x-y points in the world coordinate system. These points can then be forward projected to be drawn on each corresponding stereo image in the set of images (e.g., the stereoscopic composite view) as if they were actually present in the real-world. This results in an artificial overlay graphic that will appear to be correctly scaled from the perspective of a viewer of the 3D stereo image.

The features of a corresponding processing method are summarized in Fig. 6. Fig. 6 shows a flow chart of an example of the processing method. The method of Fig. 6 comprises determining 610 intrinsic camera parameters (calibration). The method comprises creating 620 a disparity map from stereo images. The method comprises estimating 630 a depth of a target feature. The method comprises back-projecting 640 to determine the depth in world coordinates. The method comprises creating 650 a desired 3D overlay graphic centered at calculated depth. The method comprises forward-projecting 660 the 3D overlay from world coordinates to image coordinates for each acquired image in the stereo set.

More details and aspects of the process for determining the correct location and perspective scale for creating a 3D graphic in stereoscopic imaging are mentioned in connection with the proposed concept or one or more examples described above or below (e.g., Fig. 1a to 2). The process for determining the correct location and perspective scale for creating a 3D graphic in stereoscopic imaging may comprise one or more additional optional features corresponding to one or more aspects of the proposed concept, or one or more examples described above or below.

Some embodiments relate to a microscope comprising a system as described in connection with one or more of the Figs. 1 to 6. Alternatively, a microscope may be part of or connected to a system as described in connection with one or more of the Figs. 1 to 6. Fig. 7 shows a schematic illustration of a system 700 configured to perform a method described herein. The system 700 comprises a microscope 710 and a computer system 720. The microscope 710 is configured to take images and is connected to the computer system 720. The computer system 720 is configured to execute at least a part of a method described herein. The computer system 720 may be configured to execute a machine learning algorithm. The computer system 720 and microscope 710 may be separate entities but can also be integrated together in one common housing. The computer system 720 may be part of a central processing system of the microscope 710 and/or the computer system 720 may be part of a subcomponent of the microscope 710, such as a sensor, an actor, a camera or an illumination unit, etc. of the microscope 710.

The computer system 720 may be a local computer device (e.g. personal computer, laptop, tablet computer or mobile phone) with one or more processors and one or more storage devices or may be a distributed computer system (e.g. a cloud computing system with one or more processors and one or more storage devices distributed at various locations, for example, at a local client and/or one or more remote server farms and/or data centers). The computer system 720 may comprise any circuit or combination of circuits. In one embodiment, the computer system 720 may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), for example, of a microscope or a microscope component (e.g. camera) or any other type of processor or processing circuit. Other types of circuits that may be included in the computer system 720 may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system 720 may include one or more storage devices, which may include one or more memory elements suitable to the particular application, such as a main memory in the form of random access memory (RAM), one or more hard drives, and/or one or more drives that handle removable media such as compact disks (CD), flash memory cards, digital video disk (DVD), and the like. The computer system 720 may also include a display device, one or more speakers, and a keyboard and/or controller, which can include a mouse, trackball, touch screen, voice-recognition device, or any other device that permits a system user to input information into and receive information from the computer system 720.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine readable carrier.

Other embodiments comprise the computer program for performing one of the methods described herein, stored on a machine readable carrier.

In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

Embodiments may be based on using a machine-learning model or machine-learning algorithm. Machine learning may refer to algorithms and statistical models that computer systems may use to perform a specific task without using explicit instructions, instead relying on models and inference. For example, in machine-learning, instead of a rule-based transformation of data, a transformation of data may be used, that is inferred from an analysis of historical and/or training data. For example, the content of images may be analyzed using a machine-learning model or using a machine-learning algorithm. In order for the machine-learning model to analyze the content of an image, the machine-learning model may be trained using training images as input and training content information as output. By training the machine-learning model with a large number of training images and/or training sequences (e.g. words or sentences) and associated training content information (e.g. labels or annotations), the machine-learning model "learns" to recognize the content of the images, so the content of images that are not included in the training data can be recognized using the machine-learning model. The same principle may be used for other kinds of sensor data as well: By training a machine-learning model using training sensor data and a desired output, the machine-learning model "learns" a transformation between the sensor data and the output, which can be used to provide an output based on non-training sensor data provided to the machine-learning model. The provided data (e.g. sensor data, meta data and/or image data) may be preprocessed to obtain a feature vector, which is used as input to the machine-learning model.

Machine-learning models may be trained using training input data. The examples specified above use a training method called "supervised learning". In supervised learning, the machine-learning model is trained using a plurality of training samples, wherein each sample may comprise a plurality of input data values, and a plurality of desired output values, i.e. each training sample is associated with a desired output value. By specifying both training samples and desired output values, the machine-learning model "learns" which output value to provide based on an input sample that is similar to the samples provided during the training. Apart from supervised learning, semi-supervised learning may be used. In semi-supervised learning, some of the training samples lack a corresponding desired output value. Supervised learning may be based on a supervised learning algorithm (e.g. a classification algorithm, a regression algorithm or a similarity learning algorithm. Classification algorithms may be used when the outputs are restricted to a limited set of values (categorical variables), i.e. the input is classified to one of the limited set of values. Regression algorithms may be used when the outputs may have any numerical value (within a range). Similarity learning algorithms may be similar to both classification and regression algorithms but are based on learning from examples using a similarity function that measures how similar or related two objects are. Apart from supervised or semi-supervised learning, unsupervised learning may be used to train the machine-learning model. In unsupervised learning, (only) input data might be supplied and an unsupervised learning algorithm may be used to find structure in the input data (e.g. by grouping or clustering the input data, finding commonalities in the data). Clustering is the assignment of input data comprising a plurality of input values into subsets (clusters) so that input values within the same cluster are similar according to one or more (pre-defined) similarity criteria, while being dissimilar to input values that are included in other clusters.

Reinforcement learning is a third group of machine-learning algorithms. In other words, reinforcement learning may be used to train the machine-learning model. In reinforcement learning, one or more software actors (called "software agents") are trained to take actions in an environment. Based on the taken actions, a reward is calculated. Reinforcement learning is based on training the one or more software agents to choose the actions such, that the cumulative reward is increased, leading to software agents that become better at the task they are given (as evidenced by increasing rewards).

Furthermore, some techniques may be applied to some of the machine-learning algorithms. For example, feature learning may be used. In other words, the machine-learning model may at least partially be trained using feature learning, and/or the machine-learning algorithm may comprise a feature learning component. Feature learning algorithms, which may be called representation learning algorithms, may preserve the information in their input but also transform it in a way that makes it useful, often as a pre-processing step before performing classification or predictions. Feature learning may be based on principal components analysis or cluster analysis, for example.

In some examples, anomaly detection (i.e. outlier detection) may be used, which is aimed at providing an identification of input values that raise suspicions by differing significantly from the majority of input or training data. In other words, the machine-learning model may at least partially be trained using anomaly detection, and/or the machine-learning algorithm may comprise an anomaly detection component.

In some examples, the machine-learning algorithm may use a decision tree as a predictive model. In other words, the machine-learning model may be based on a decision tree. In a decision tree, observations about an item (e.g. a set of input values) may be represented by the branches of the decision tree, and an output value corresponding to the item may be represented by the leaves of the decision tree. Decision trees may support both discrete values and continuous values as output values. If discrete values are used, the decision tree may be denoted a classification tree, if continuous values are used, the decision tree may be denoted a regression tree.

Association rules are a further technique that may be used in machine-learning algorithms. In other words, the machine-learning model may be based on one or more association rules. Association rules are created by identifying relationships between variables in large amounts of data. The machine-learning algorithm may identify and/or utilize one or more relational rules that represent the knowledge that is derived from the data. The rules may e.g. be used to store, manipulate or apply the knowledge.

Machine-learning algorithms are usually based on a machine-learning model. In other words, the term "machine-learning algorithm" may denote a set of instructions that may be used to create, train or use a machine-learning model. The term "machine-learning model" may denote a data structure and/or set of rules that represents the learned knowledge (e.g. based on the training performed by the machine-learning algorithm). In embodiments, the usage of a machine-learning algorithm may imply the usage of an underlying machine-learning model (or of a plurality of underlying machine-learning models). The usage of a machine-learning model may imply that the machine-learning model and/or the data structure/set of rules that is the machine-learning model is trained by a machine-learning algorithm.

For example, the machine-learning model may be an artificial neural network (ANN). ANNs are systems that are inspired by biological neural networks, such as can be found in a retina or a brain. ANNs comprise a plurality of interconnected nodes and a plurality of connections, so-called edges, between the nodes. There are usually three types of nodes, input nodes that receiving input values, hidden nodes that are (only) connected to other nodes, and output nodes that provide output values. Each node may represent an artificial neuron. Each edge may transmit information, from one node to another. The output of a node may be defined as a (non-linear) function of its inputs (e.g. of the sum of its inputs). The inputs of a node may be used in the function based on a "weight" of the edge or of the node that provides the input. The weight of nodes and/or of edges may be adjusted in the learning process. In other words, the training of an artificial neural network may comprise adjusting the weights of the nodes and/or edges of the artificial neural network, i.e. to achieve a desired output for a given input.

Alternatively, the machine-learning model may be a support vector machine, a random forest model or a gradient boosting model. Support vector machines (i.e. support vector networks) are supervised learning models with associated learning algorithms that may be used to analyze data (e.g. in classification or regression analysis). Support vector machines may be trained by providing an input with a plurality of training input values that belong to one of two categories. The support vector machine may be trained to assign a new input value to one of the two categories. Alternatively, the machine-learning model may be a Bayesian network, which is a probabilistic directed acyclic graphical model. A Bayesian network may represent a set of random variables and their conditional dependencies using a directed acyclic graph. Alternatively, the machine-learning model may be based on a genetic algorithm, which is a search algorithm and heuristic technique that mimics the process of natural selection.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

## List of reference Signs

| | |
|---|---|
| 10 | Scene |
| 12 | Information overlay |
| 100 | Optical imaging system / surgical imaging system / surgical microscope system |
| 110 | System |
| 112 | Interface |
| 114 | Processor |
| 116 | Storage device |
| 120 | Stereoscopic imaging device / stereo microscope |
| 130 | Display device |
| 130a | Display for displaying three-dimensional content. |
| 130b | Stereoscopic ocular displays |
| 130c | Stereoscopic head-mounted display |
| 140 | Depth sensor |
| 210 | Obtaining stereoscopic image data |
| 220 | Determining depth information |
| 230 | Determining a scaling factor |
| 240 | Generating a stereoscopic composite view |
| 250 | Providing a display signal |
| 310 | Imaging system |
| 321,322, 323 | Camera |
| 330 | Image/graphics processor |
| 340 | 3D image display |
| 400 | Sample |
| 410 | Imaging system |
| 420 | Camera |
| 430 | Image/graphics processor |
| 440 | 3D image display |
| 510 | Intrinsic calibration Matrix *K* can be obtained from camera calibration |
| 520 | *R* and *t* can be obtained from camera calibration and arbitrary placement of world coordinate system |
| 530 | Reformulated rotation matrix allows inversion |
| 540 | Scaling factor s can be computed from the disparity map in pixel units |
| 610 | Determining intrinsic camera parameters (calibration) |
| 620 | Creating a disparity map from stereo images |
| 630 | Estimating a depth of a target feature |
| 640 | Back-projecting to determine the depth in world coordinates |
| 650 | Creating a desired 3D overlay graphic centered at calculated depth |
| 660 | Forward-projecting the 3D overlay from world coordinates to image coordinates for each acquired image in the stereo set |
| 700 | System |
| 710 | Microscope |
| 720 | Computer system |

## Claims

1. A system (110) for an optical imaging system (100), the system comprising one or more processors (114) and one or more storage devices (112), wherein the system is configured to:

   obtain stereoscopic image data of a scene (10) from a stereoscopic imaging device (120) of the optical imaging system;
   determine depth information on at least a portion of the scene;
   determine a scaling factor of an information overlay (12) to be overlaid over the stereoscopic image data based on the depth information;
   generate a stereoscopic composite view of the stereoscopic image data and the information overlay, with the information overlay being scaled according to the scaling factor; and
provide a display signal comprising the stereoscopic composite view to a stereoscopic display device (130a; 130b; 130c).

**2.** The system according to claim 1, wherein the system is configured to determine the depth information based on the stereoscopic image data.

**3.** The system according to claim 2, wherein the system is configured to determine a disparity map based on the stereoscopic image data, and to determine the depth information based on the disparity map.

**4.** The system according to one of the claims 2 or 3, wherein the system is configured to determine per-pixel depth information of the portion of the scene based on the stereoscopic image data, and to determine the depth information in the real world by back-projecting the per-pixel depth information, with the scaling factor being determined based on the depth information in the real world.

**5.** The system according to claim 1, wherein the system is configured to obtain a depth sensor signal of a depth sensor (140) of the optical imaging system, and to determine the depth information based on the depth sensor signal.

**6.** The system according to one of the claims 1 to 5, wherein the depth information corresponds to depth information in the real world, wherein the system is configured to generate the stereoscopic composite view by forward-proj ecting the information overlay based on the depth information in the real world onto each individual stereo image of the stereoscopic composite view, so that the information overlay visually appears to be drawn at real-world depth.

**7.** The system according to one of the claims 1 to 6, wherein the system is configured to overlay the information overlay over the stereoscopic image data such, that, according to the depth information, the overlay does not visually collide with elements of the portion of the scene.

**8.** The system according to claim 7, wherein the system is configured to determine a depth profile of the portion of the scene, and to overlay the information overlay over the stereoscopic image data such, that, according to the depth profile, the overlay does not visually collide with elements of the portion of the scene.

**9.** The system according to claim 8, wherein the system is configured to adapt a perceived shape of the information overlay such, that the information is adapted to the depth profile of the portion of the scene.

**10.** The system according to one of the claims 1 to 9, wherein the system is configured to overlay the information overlay over the stereoscopic image data such, that, according to the depth information, the overlay visually hovers above the portion of the scene.

**11.** The system according to one of the claims 1 to 10, wherein the system is configured to select the portion of the scene, by selecting a portion of a field of view of the stereoscopic image data that is at the center of the field of view of the stereoscopic image data, or by performing object detection or image segmentation on the stereoscopic image data and selecting the portion of the scene based on a detected object or based on a segmented portion of the stereoscopic image data, and to determine the depth information for the selected portion of the scene.

**12.** The system according to one of the claims 1 to 11, wherein the system is configured to obtain the stereoscopic image data from one or more optical imaging sensors of a microscope (120).

**13.** The system according to one of the claims 1 to 12, wherein the system is configured to provide the stereoscopic display signal to at least one of a display (130a) for displaying three-dimensional content, stereoscopic ocular displays (130b) and a stereoscopic head-mounted display (130c)..

**14.** A method for an optical imaging system (100), the method comprising:

obtaining (210) stereoscopic image data of a scene of a stereoscopic imaging device of the optical imaging system;
determining (220) depth information on at least a portion of the scene;
determining (230) a scaling factor of an information overlay to be overlaid over the stereoscopic image data based on the depth information;

generating (240) a stereoscopic composite view of the stereoscopic image data and the information overlay, with the information overlay being scaled according to the scaling factor; and
providing (250) a display signal comprising the stereoscopic composite view to a stereoscopic display device.

**15.** A computer program with a program code for performing the method according to claim 14 when the computer program is run on a processor.

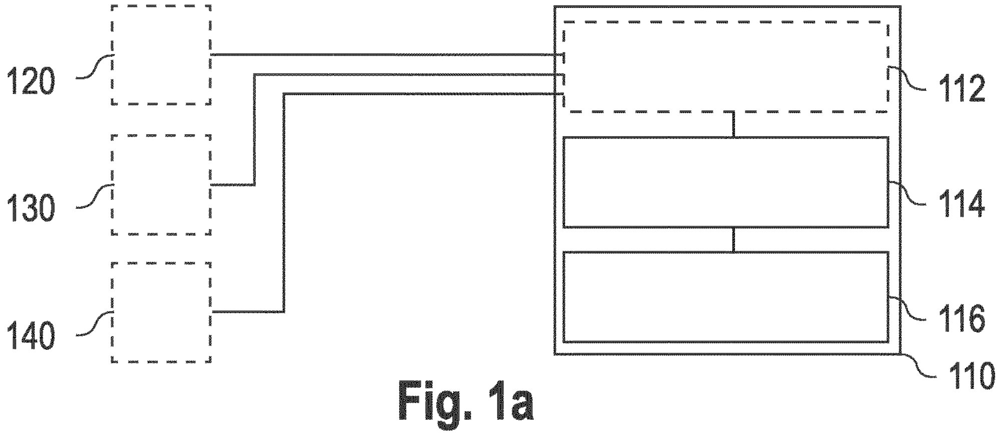


Fig. 1a

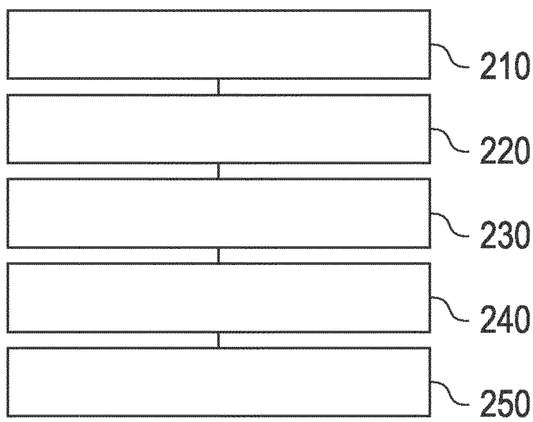


Fig. 2

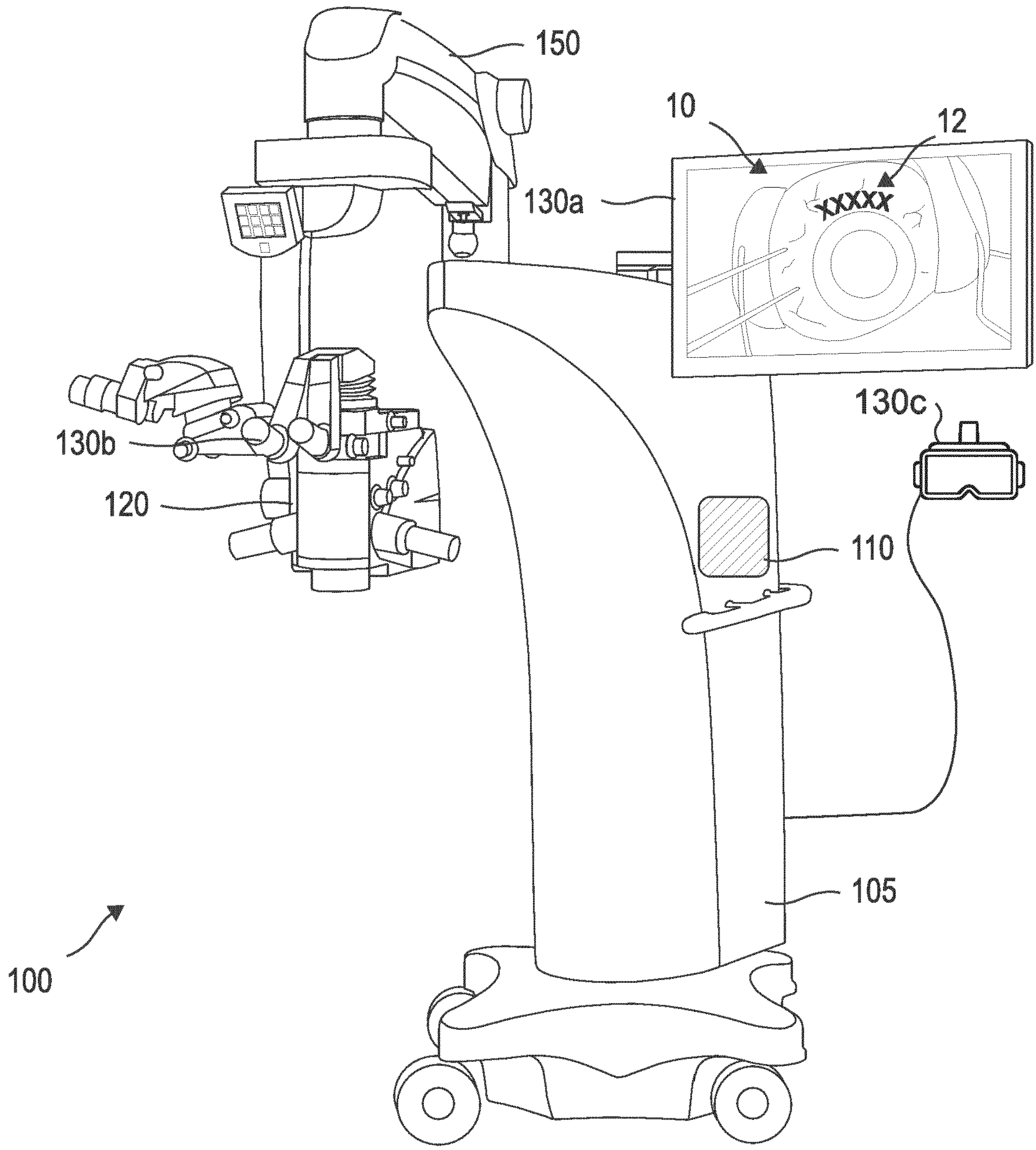


Fig. 1b

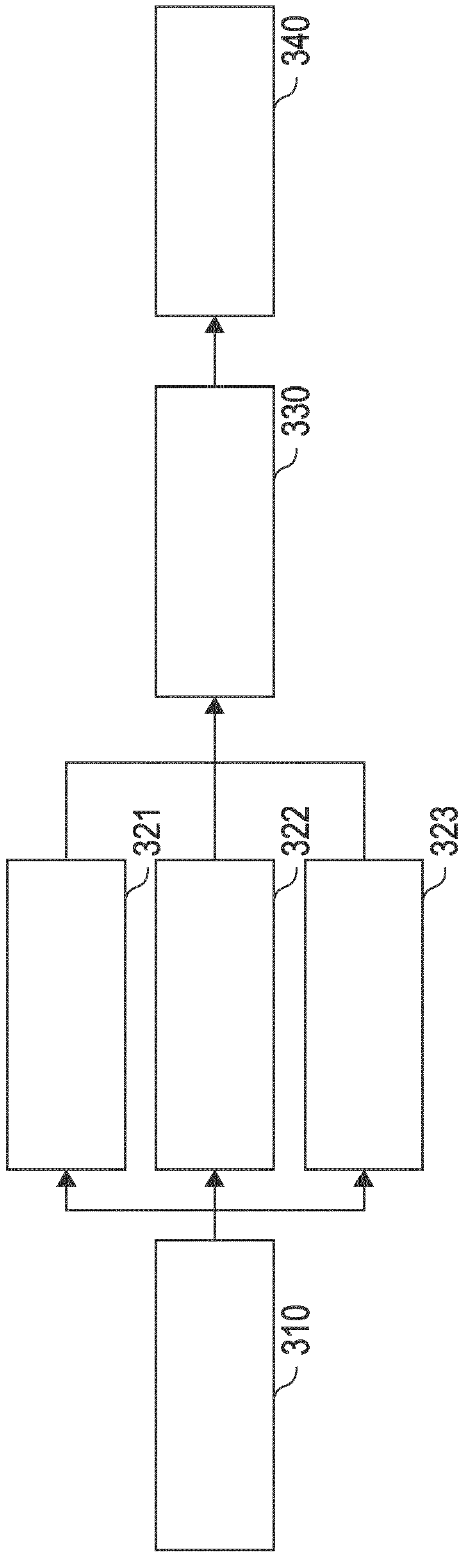


Fig. 3

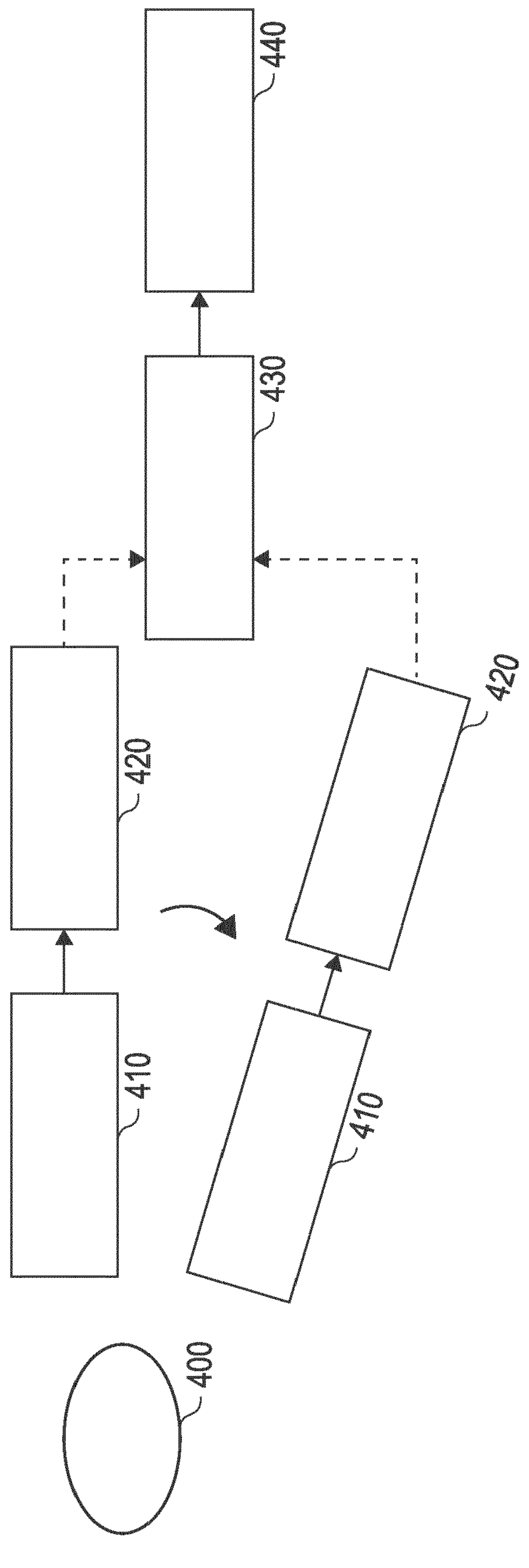


Fig. 4

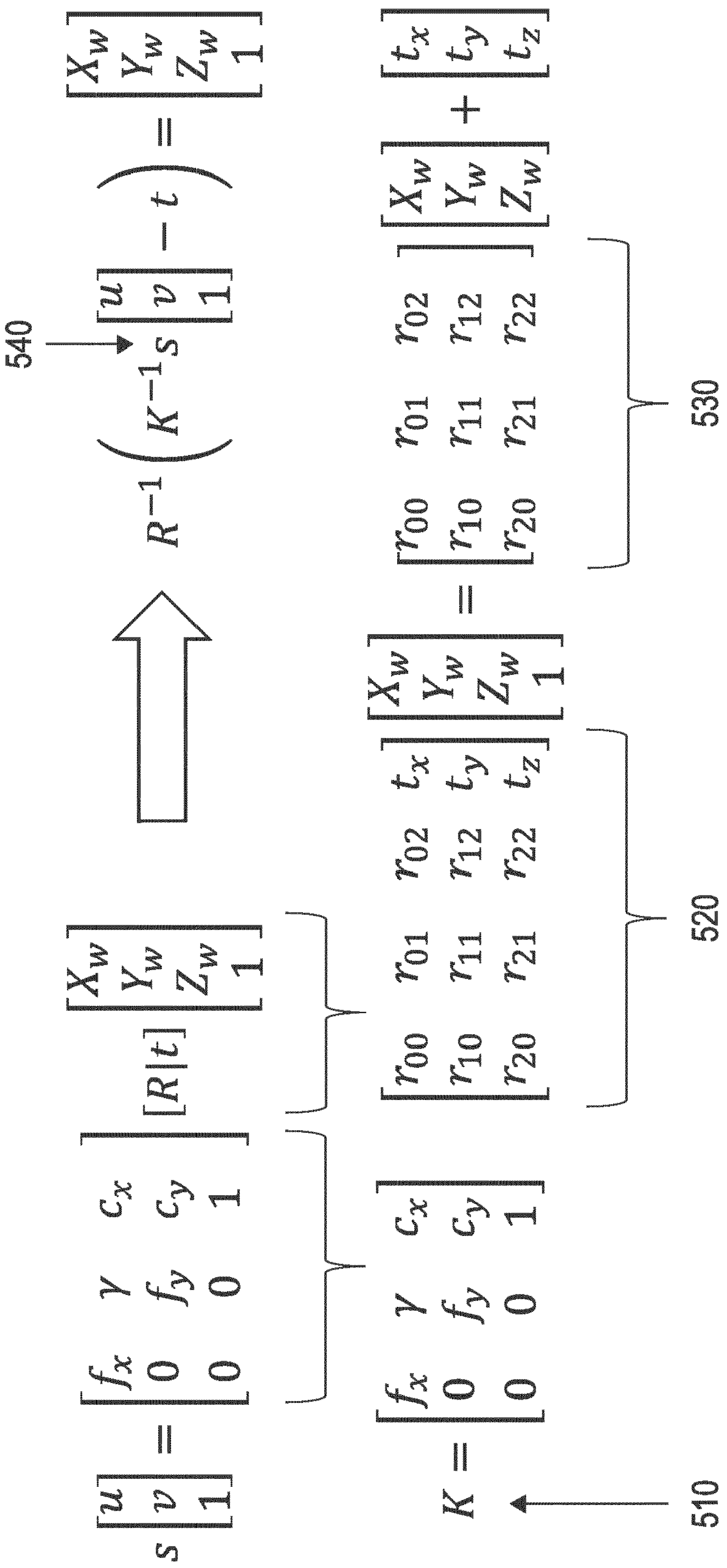


Fig. 5

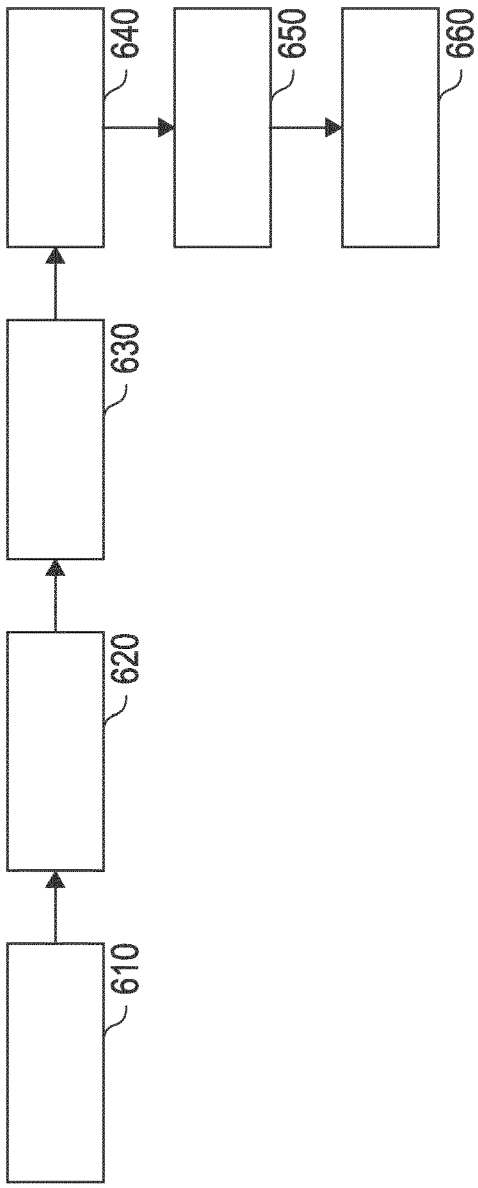


Fig. 6

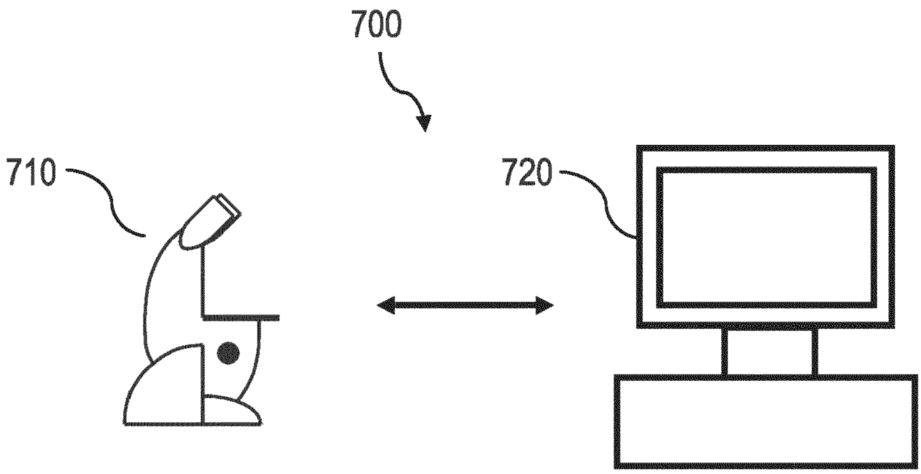


Fig. 7

European Patent Office / Europäisches Patentamt / Office européen des brevets

# EUROPEAN SEARCH REPORT

Application Number
EP 22 20 8534

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2018/032457 A1 (SZ DJI TECHNOLOGY CO LTD [CN]) 22 February 2018 (2018-02-22)<br>* paragraph [0054] - paragraph [0055] *<br>* paragraph [0081] *<br>* paragraph [0087] - paragraph [0089] *<br>* paragraph [0099] - paragraph [0104] *<br>* paragraph [0114] *<br>* paragraph [0115] *<br>* paragraph [0139] - paragraph [0141] *<br>* paragraph [0152] *<br>* paragraph [0180] *<br>* paragraph [0189] *<br>* paragraph [0216] *<br>----- | 1-5,7-9, 11-15 | INV.<br>H04N13/183<br>G06T11/60<br>H04N13/271<br>H04N13/00 |
| X | US 2013/201283 A1 (BROBERG DAVID K [US] ET AL) 8 August 2013 (2013-08-08)<br>* paragraph [0022] *<br>* paragraph [0030] - paragraph [0031] *<br>* paragraph [0034] - paragraph [0035] *<br>* paragraph [0040] *<br>* paragraph [0045] - paragraph [0053] *<br>----- | 1-3,6, 10-15 | TECHNICAL FIELDS SEARCHED (IPC)<br>H04N<br>G06T |

The present search report has been drawn up for all claims

| Place of search | Date of completion of the search | Examiner |
|---|---|---|
| The Hague | 28 April 2023 | Borcea, Veronica |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO.

EP 22 20 8534

This annex lists the patent family members relating to the patent documents cited in the above-mentioned European search report. The members are as contained in the European Patent Office EDP file on
The European Patent Office is in no way liable for these particulars which are merely given for the purpose of information.

28-04-2023

| Patent document cited in search report | Publication date | Patent family member(s) | Publication date |
| --- | --- | --- | --- |
| WO 2018032457 A1 | 22-02-2018 | CN 109154499 A | 04-01-2019 |
| | | EP 3500822 A1 | 26-06-2019 |
| | | US 2019220002 A1 | 18-07-2019 |
| | | US 2021389762 A1 | 16-12-2021 |
| | | WO 2018032457 A1 | 22-02-2018 |
| US 2013201283 A1 | 08-08-2013 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20150249817 A1